# DEMANDE DE BREVET EUROPEEN

(11) **EP 2 079 061 A1**
(43) Date de publication de la demande: **15.07.2009**
(21) Numéro de dépôt: 08356053.2
(22) Date de dépôt: 20.03.2008
(51) Int. Cl.: G07F 9/02, G07F 11/38, G06Q 10/00, G07F 11/62

(54) **Ensemble de gestion de produits, de type pharmaceutique ou parapharmaceutique**

(30) Priorité: 21.03.2007 FR 0702057
(71) Demandeur: Chapon, Thierry, 69140 Rillieux La Pape (FR); Auburge, Jean-Alain, 34070 Montpellier (FR)
(72) Inventeur: Chapon, Thierry, 69140 Rillieux La Pape (FR); Auburge, Jean-Alain, 34070 Montpellier (FR)
(74) Mandataire: Schouller, Jean-Philippe

(57) **Abrégé**

Cet ensemble comprend un rayonnage (2) pourvu de différents canaux de réception (C) de différents produits, plusieurs postes de stockage (ST₁-ST₄), plusieurs poste de déstockage (DST₁-DST₄), l'entrée (E) de chaque canal de réception (C) étant pourvue d'un jeu (J₂) de diodes de stockage, chaque diode d'un même jeu étant associée à un poste de stockage respectif, de sorte que la saisie d'une donnée d'un produit, au niveau d'un poste de stockage considéré, conduit à l'allumage de la diode de stockage associée à la fois à ce poste et au canal dans lequel ce produit doit être stocké, la sortie (S) de chaque canal étant en outre pourvue d'un jeu (J₁) de diodes de déstockage, chaque diode d'un même jeu étant associée à un poste de déstockage respectif, de sorte que la saisie d'une donnée d'un produit, au niveau d'un poste de déstockage considéré, conduit à l'allumage de la diode de déstockage associée à la fois à ce poste et au canal à partir duquel ce produit doit être déstocké.

## Description

La présente invention concerne un ensemble de gestion de produits, de type pharmaceutique ou parapharmaceutique.

L'invention a trait à la gestion de produits, à savoir qu'elle vise plus spécifiquement à faciliter les opérations de stockage et de déstockage de tels produits sur un rayonnage. L'invention trouve tout particulièrement son application à des rayonnages comportant un nombre élevé de produits présentant des références différentes. Dans ces conditions, l'invention vise plus particulièrement la gestion de produits de type pharmaceutique ou parapharmaceutique.

De façon classique, un rayonnage est formé d'une série d'étagères, qui peuvent être horizontales ou inclinées, qui sont associées à des séparations formant différents canaux de réception des produits. Chaque canal comprend une entrée, permettant le stockage de ces produits, à savoir l'introduction de ces derniers dans le canal considéré. De plus, chaque canal possède une sortie, qui permet à un utilisateur de déstocker le produit, à savoir de le sortir hors du volume intérieur du canal.

Il est à noter que cette entrée et cette sortie peuvent être distinctes, ou bien confondues. Dans un premier cas, l'entrée et la sortie distinctes sont placées de manière opposée, respectivement à l'avant et à l'arrière du canal. En revanche, dans le cas de rayonnages placés par exemple contre une paroi, seule la face avant du canal est accessible, de sorte qu'elle définit à la fois l'entrée et la sortie.

De façon classique, la gestion de produits, par exemple au sein d'une pharmacie, s'opère à partir d'un stock de base, entreposé à proximité des rayonnages. Lorsque le personnel s'aperçoit qu'un canal du rayonnage est vide, ou éventuellement ne contient plus qu'un nombre limité de produits, il « recharge » ce canal à partir du stock de produits précité. Par ailleurs, lorsqu'un client demande certains produits, le pharmacien ou le préparateur recherche les canaux contenant les produits considérés, de manière à les déstocker en vue de leur vente.

Cette solution connue présente cependant certains inconvénients.

Tout d'abord, les opérations évoquées ci-dessus sont entièrement manuelles, de sorte qu'elles peuvent s'accompagner d'erreurs, ce qui peut conduire notamment à des phénomènes intempestifs de rupture de stock. Par ailleurs, ces opérations sont particulièrement longues et fastidieuses. Enfin, cette solution implique que du personnel qualifié est astreint à des tâches subalternes. En particulier, cette situation peut empêcher le pharmacien d'être présent en permanence dans l'espace public de sa pharmacie, ce qui est désavantageux en termes de relation vis-à-vis de la clientèle.

Ceci étant précisé, l'invention vise à remédier à ces différents inconvénients.

A cet effet, elle a pour objet un ensemble de gestion de produits pharmaceutiques et parapharmaceutiques, comprenant :
- un rayonnage pourvu de différents canaux de réception de différents produits, chaque canal présentant une entrée permettant le stockage des produits et une sortie permettant le déstockage des produits ;
- plusieurs postes de stockage, pourvus de moyens informatiques de lecture de données relatives aux différents produits ;
- plusieurs poste de déstockage, pourvus de moyens informatiques de lecture de données relatives aux différents produits ;
- l'entrée de chaque canal de réception étant pourvue d'un jeu de diodes de stockage, chaque diode d'un même jeu étant associée à un poste de stockage respectif, de sorte que la saisie d'une donnée d'un produit, au niveau d'un poste de stockage considéré, conduit à l'allumage de la diode de stockage associée à la fois à ce poste et au canal dans lequel ce produit doit être stocké ;
- la sortie de chaque canal étant en outre pourvue d'un jeu de diodes de déstockage, chaque diode d'un même second jeu étant associée à un poste de déstockage respectif, de sorte que la saisie d'une donnée d'un produit, au niveau d'un poste de déstockage considéré, conduit à l'allumage de la diode de déstockage associée à la fois à ce poste et au canal à partir duquel ce produit doit être déstocké.

Selon d'autres caractéristiques :
- les différents jeux de diodes de stockage présentent le même nombre de diodes ;
- les différents jeux de diodes de déstockage présentent le même nombre de diodes ;
- il est prévu un même nombre de diodes de stockage et de déstockage à l'entrée et à la sortie de chaque canal ;
- au sein de chaque jeu, les diodes présentent des couleurs différentes ;
- pour chaque jeu, les diodes d'un même rang présentent la même couleur ;
- l'entrée et la sortie sont prévues sur deux faces opposées du rayonnage, les différents jeux de diodes de stockage étant présents sur la première face, alors que les différents jeux de diodes de déstockage sont prévus sur la face opposée ,
- au sein d'un même jeu de diodes, les différentes diodes sont propres à fournir au moins une série d'informations différentes, relatives à la gestion des produits ;
- une première série d'informations différentes est relative au nombre de produits présents dans les canaux ;
- une autre série d'informations différentes est relative à la fréquence de déstockage des produits.

L'invention va être décrite ci-après, en référence aux dessins annexés, donnés uniquement à titre d'exemples non limitatifs, dans lesquels :
- la figure 1 est une vue en perspective, illustrant de façon schématique un ensemble de gestion de produits conforme à l'invention ;
- la figure 2 est une vue de face, illustrant de manière schématique quatre canaux d'une même rangée de la face avant d'un rayonnage appartenant à cet ensemble de gestion ;
- la figure 3 est une vue de face, analogue à la figure 2, illustrant de manière schématique la face arrière de ces quatre mêmes canaux ;
- les figures 4 à 7 sont des vues schématiques, analogues à la figure 3, illustrant quatre exemples d'allumage des diodes présentes sur la face arrière du rayonnage ; et
- les figures 8 à 11 sont des vues de face, analogues à la figure 2, illustrant quatre exemples d'allumage des diodes présentes sur la face avant de ce rayonnage.

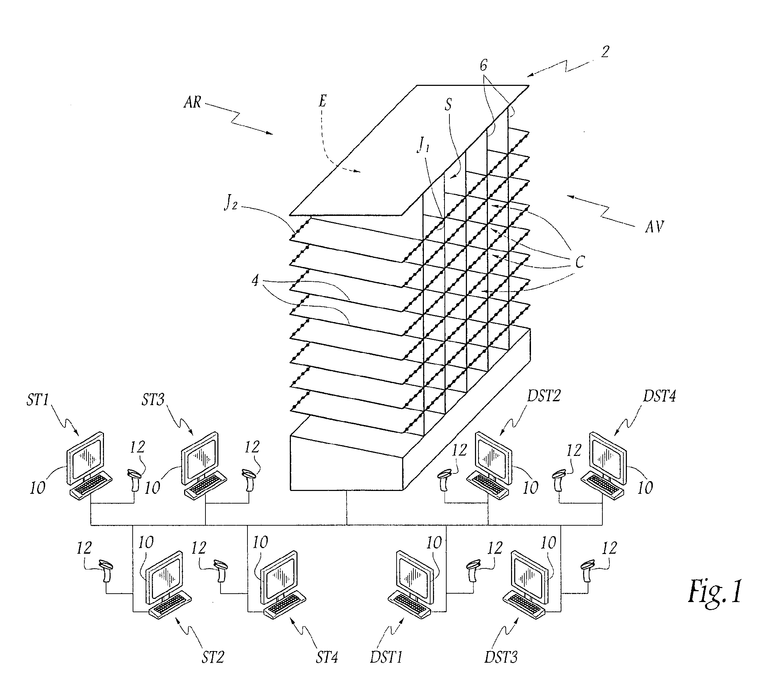

La figure 1 illustre un ensemble de gestion de produits conforme à l'invention, qui comprend tout d'abord un rayonnage, désigné dans son ensemble par la référence 2. Ce dernier est pourvu d'une série d'étagères 4, disposées les unes au-dessous des autres, qui peuvent être droites ou inclinées, tout en étant éventuellement réglables en hauteur. Il est par ailleurs prévu une série de séparations 6, disposées les unes à côté des autres, qui sont réglables en écartement. Les étagères 4 et les séparations 6 définissent par conséquent plusieurs rangées et plusieurs colonnes de canaux C, dont chacun est destiné à la réception d'un produit d'une référence donnée, qui est de type pharmaceutique ou parapharmaceutique.

Sur l'exemple de la figure 1, le rayonnage possède une face avant AV, ainsi qu'une face arrière AR, qui sont toutes deux accessibles par des opérateurs. Par conséquent, chaque canal C possède une entrée E, au niveau de la face arrière, ainsi qu'une sortie S, au niveau de la face avant, en vue du stockage et du déstockage de produits comme on le verra dans ce qui suit. Il est cependant à noter que, dans le cas où la face arrière AR n'est pas accessible, l'entrée E et la sortie S sont confondues au niveau de la face avant AV de chaque canal.

L'ensemble de gestion de produits conforme à l'invention comprend en outre au moins un poste de stockage, ainsi qu'au moins un poste de déstockage. Dans l'exemple illustré, on retrouve quatre postes de stockage ST₁ à ST₄, ainsi que quatre postes de déstockage DST₁ à DST₄. Chaque poste est équipé d'un ordinateur 10 de type classique qui est associé à un lecteur 12, permettant notamment d'identifier un code à barres présent sur le produit à stocker ou à déstocker.

Enfin, chaque canal C est associé à deux jeux de diodes, respectivement J₁ et J₂, dont l'un est présent sur la face avant et dont l'autre est présent sur la face arrière de ce canal. Chaque diode est par exemple du type LED (Light Emitting Diode). Au sens de l'invention, le terme « diode » regroupe tout type d'organe lumineux susceptible de s'allumer ou de s'éteindre.

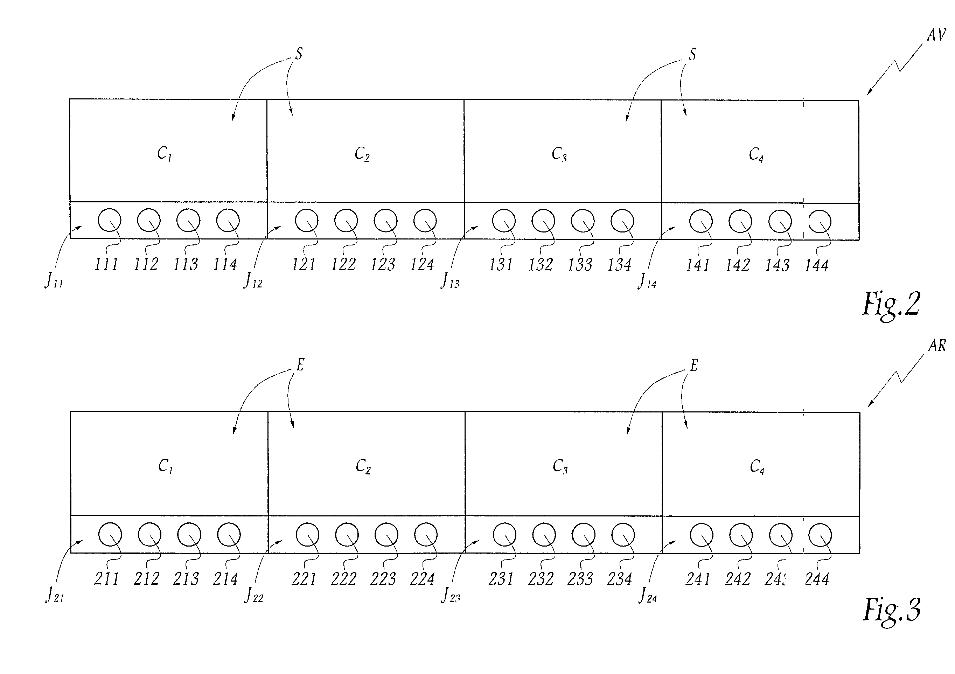

Les figures 2 et 3 représentent de façon plus précise les faces avant et arrière d'une rangée de canaux. On retrouve ainsi, sur la figure 2, la face avant, à savoir la sortie S, de quatre canaux C₁ à C₄ et, sur la figure 3, la face arrière ou entrée E, de ces mêmes quatre canaux.

Chaque canal est pourvu, sur sa face avant, d'un premier jeu de diodes noté J₁₁ à J₁₄. De manière analogue, chaque canal C₁ à C₄ est pourvu, sur sa face arrière, d'un second jeu de diodes, noté J₂₁ à J₂₄.

Les différents premiers jeux sont chacun composés de plusieurs diodes, en l'occurrence quatre dans l'exemple illustré. On note ainsi 111 à 114 le premier jeu J₁₁ de diodes du canal C₁, 121 à 124 le premier jeu J₁₂ de diodes du canal C₂, 131 à 134 le premier jeu J₁₃ de diodes du troisième canal C₃, et 141 à 144, le premier jeu J₁₄ de diodes du quatrième canal C₄.

Par ailleurs, comme illustré à la figure 3, chaque second jeu de diodes, prévu sur la face arrière de chaque canal, comprend aussi plusieurs diodes, en l'occurrence également quatre. De manière analogue à ce qui a été décrit précédemment, on note 211 à 214 le second jeu J₂₁ de diodes du canal C₁, 221 à 224 le second jeu J₂₂ de diodes du deuxième canal C₂, 231 à 234 le second jeu J₂₃ de diodes du troisième canal C₃, et 241 à 244 le second jeu J₂₄ de diodes du quatrième canal C₄.

On suppose en outre que ces quatre canaux C₁ à C₄ sont destinés à recevoir quatre produits différents, notés P₁ à P₄. Dans ces conditions, on va décrire ci-après quelques exemples de réalisation de la mise en oeuvre de l'ensemble de gestion conforme à l'invention.

On suppose tout d'abord qu'on veut stocker différents produits au niveau de l'entrée E, à savoir de la face arrière AR. La présence de quatre diodes différentes, au niveau de chaque jeu J₂₁ à J₂₄, permet de travailler avec les quatre postes de stockage ST₁ à ST₄. Ainsi, chacun de ces postes est associé à une des diodes de chaque jeu.

En d'autres termes, le premier poste ST₁ est associé à chaque première diode 211, 221, 231 et 241. De façon itérative, le quatrième poste est associé à chaque quatrième diode 214, 224, 234 et 244. Ceci permet un stockage simultané, mis en oeuvre par un nombre de personnes pouvant aller jusqu'à quatre.

De manière avantageuse, chaque première diode présente une première couleur, chaque seconde diode une seconde couleur, chaque troisième diode une troisième couleur, et chaque quatrième diode une quatrième couleur, ces quatre couleurs étant différentes. Dans la présente description le rang des diodes est croissant de gauche à droite, à savoir que la première diode est située à gauche et la quatrième et dernière diode de chaque jeu est située à droite.

Supposons tout d'abord qu'un utilisateur, au premier poste ST₁, ait en main le premier produit P₁ destiné à être stocké dans le canal C₁. Au niveau de ce premier poste, cet utilisateur rentre alors une donnée informatique relative à ce produit P₁, en particulier les chiffres intervenant la composition de son code à barres. A cet effet il peut, soit taper ce code sur le clavier de l'ordinateur 10, soit directement placer le code à barres du produit devant le lecteur 12.

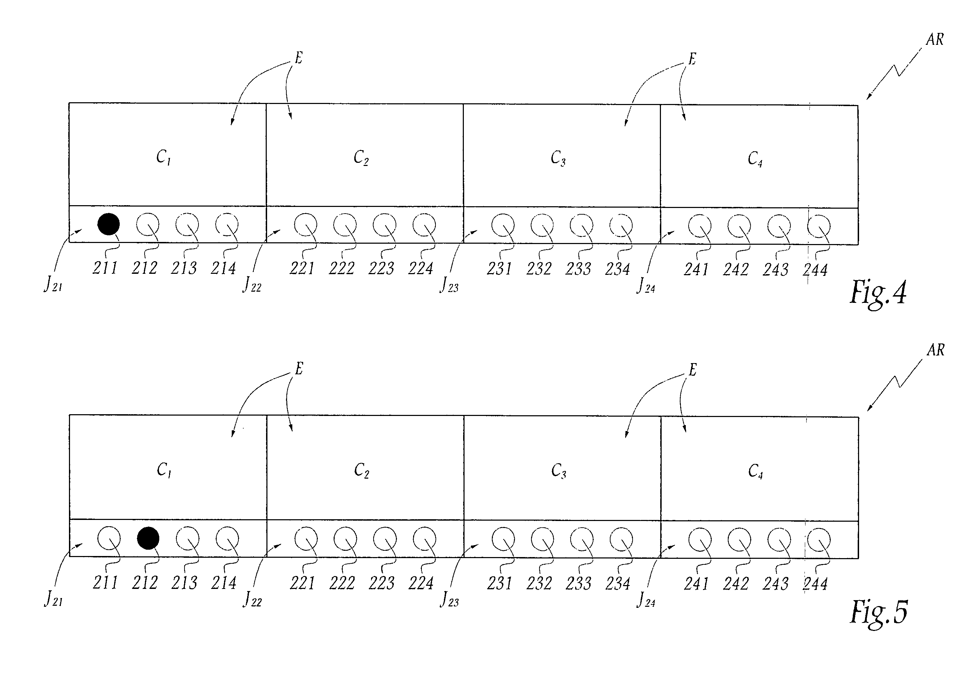

La saisie de cette donnée conduit à l'éclairage de la première diode 211, à savoir la diode du canal C₁ destiné à recevoir ce produit P₁, qui est associée à ce premier poste d'utilisateur. Cette situation est illustrée sur la figure 4, où cette diode 211 est allumée.

De façon analogue, si ce même produit P₁ est traité au niveau du deuxième poste ST₂, la seconde diode 212 associée à la fois à ce premier produit ainsi qu'à ce deuxième poste s'éclaire alors, ce qui est illustré sur la figure 5. Si ce produit est saisi au niveau du troisième poste, la troisième diode 213 s'éclaire et, si ce produit P₁ est saisi au niveau du quatrième poste, la quatrième diode 214 s'éclaire. Ces deux dernières possibilités ne sont pas représentées sur les dessins annexés.

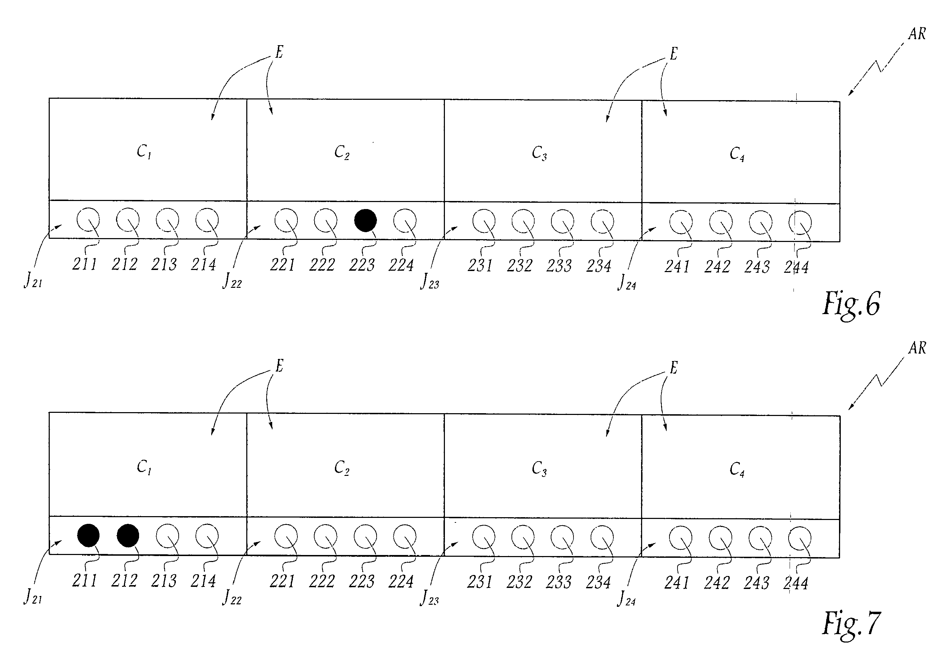

De plus, la saisie d'un produit P₂, destiné à être reçu dans le canal C₂, s'accompagne de l'éclairage de l'une des diodes 221 à 224, selon que cette saisie est réalisée au niveau du premier, du second, du troisième ou du quatrième poste. La figure 6 illustre le cas où le produit P₂ est saisi au niveau du troisième poste ST₃, ce qui induit l'allumage de la troisième diode 223 associée à ce troisième poste et au second canal C₂. Cette identification se produit de manière analogue dans le cas de produits P₃ ou P₄, destinés à être stockés dans les canaux C₃ ou C₄.

Supposons maintenant que deux utilisateurs veuillent stocker en même temps le même produit, par exemple P₁. Dans ce cas, chacun saisit le code-barres considéré au niveau de son poste respectif. Ceci conduit à l'éclairage de deux diodes du jeu J₂₁, associé au canal C₁. Ainsi, dans le cas où les saisies sont réalisées au niveau des premier ST₁ et second ST₂ postes, les diodes 211 et 212 sont allumées de manière simultanée, ce qui est illustré à la figure 7.

L'invention permet par conséquent le stockage simultané des quatre produits P₁ à P₄, par l'intermédiaire de quatre utilisateurs. Bien entendu, ces différents utilisateurs peuvent stocker en même temps les différents produits du rayonnage, puisque la saisie du code-barres de chaque produit conduit à l'éclairage d'une diode, associée à la fois à un canal donné et à un poste d'opérateur donné.

De façon résumée, on retrouve, sur la face arrière, un nombre N de diodes, qui correspond au produit entre le nombre de canaux N_{C} et le nombre de postes de stockage N_{ST}. Dans ces conditions, la saisie du code-barres d'un produit considéré, au niveau d'un poste de stockage considéré, conduit à l'éclairage d'une diode, associée à la fois à ce produit et à ce poste. Ceci fournit par conséquent une information visuelle immédiate à la personne désirant stocker ce produit, de sorte que cette opération est particulièrement fiable, rapide et commode.

Le processus de déstockage s'opère de manière analogue à ce qui a été décrit ci-dessus en référence au stockage. Ainsi, chaque première diode 111, 121, 131 et 141 est associée au premier poste DST₁ et, de façon itérative, chaque quatrième diode 114, 124, 134 et 144 est associée au quatrième poste DST₄. De plus, les quatre diodes équipant un même canal présentent avantageusement des couleurs différentes.

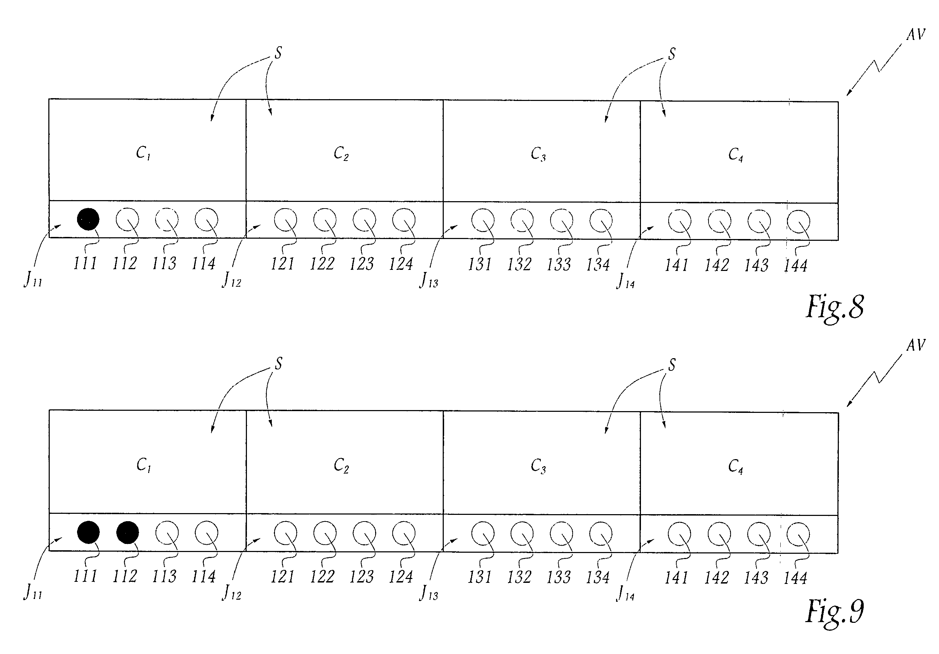

Supposons tout d'abord qu'un client commande un premier produit P₁ stocké au préalable dans le canal C₁, auprès de l'opérateur occupant le premier poste DST₁. Ce dernier tape alors le code à barres de ce produit sur le clavier de son ordinateur, ce qui conduit à l'éclairage de la diode 111, associée à la fois au premier canal C₁ et au premier poste de traitement DST₁ (voir figure 8). Cette information visuelle immédiate permet à l'utilisateur de déstocker de manière fiable et rapide le produit, en vue de sa vente au client.

Comme précédemment pour le stockage, si ce même produit P₁ est commandé au niveau du deuxième poste DST₂, la diode 112 s'éclaire alors. En outre, si ce produit est saisi au niveau du troisième poste, la diode 113 s'éclaire et, si ce produit est saisi au niveau du quatrième poste, la diode 114 s'éclaire.

Si un autre client commande un second produit P₂, stocké dans le canal C₂, l'opération de saisie du code-barres conduit à l'éclairage de l'une ou l'autre des diodes 121 à 124, associée au second canal C₂, selon que la saisie est réalisée au niveau du premier, du second, du troisième ou du quatrième poste de déstockage.

Dans le cas où deux clients commandent de manière simultanée le même produit, par exemple P₁, au niveau de deux postes de déstockage, par exemple DST₁ et DST₂, les deux diodes voisines 111 et 112 s'éclairent (figure 9). Ceci permet donc à deux opérateurs de déstocker, puis de vendre, deux produits identiques de manière simultanée.

D'autres informations relatives aux produits peuvent être identifiées de manière simple, par mise en oeuvre de l'invention. Ainsi, on peut tout d'abord accéder à une visualisation immédiate quant au taux de remplissage des différents canaux.

Dans cette optique, les différentes diodes d'un même rang, qui présentent la même couleur, sont représentatives d'états de remplissage. En reprenant l'exemple des figures 2 et 3, on peut par exemple supposer que chaque première diode, aussi bien du côté avant que du côté arrière, est par exemple de couleur verte et désigne un canal où il reste un nombre significatif de produits, par exemple supérieur à cinq. Chaque seconde diode avant ou arrière, par exemple de couleur rouge, désigne un canal dépourvu de produit. Chaque troisième diode, par exemple de couleur orange, désigne un canal où ne se trouve plus qu'un unique produit. Enfin, chaque quatrième diode, par exemple de couleur jaune, désigne un canal où ne sont plus présents que deux produits.

Cette étape de la mise en oeuvre de l'invention permet de visualiser à la fois au niveau de la face avant et de la face arrière, le nombre de produits présents dans chaque canal. Par conséquent, ceci conduit les utilisateurs à stocker des produits supplémentaires, dans les canaux affectés aux diodes de couleur rouge, voire orange. Dans cette optique, on conçoit qu'il est avantageux de prévoir le même nombre de diodes pour chaque canal, respectivement à l'avant et à l'arrière, ce qui permet de disposer du même code de couleurs.

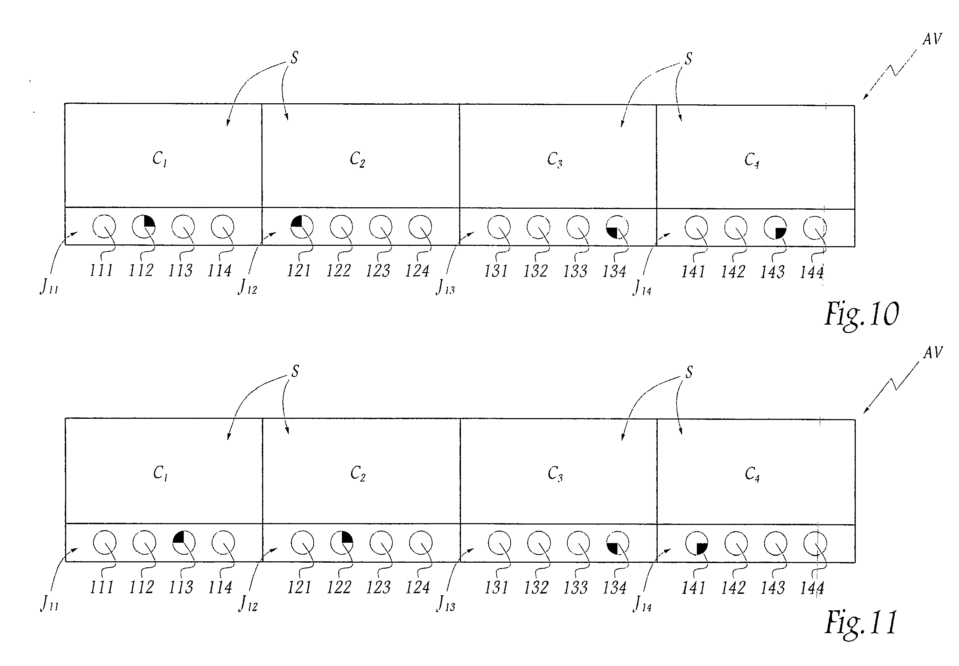

Dans l'exemple de la figure 10, on suppose que les première à quatrième diodes associées à chaque canal sont respectivement verte, rouge, orange et jaune. Sur cette figure sont respectivement allumées la diode rouge 112 du premier canal, la diode verte 121 du deuxième canal, la diode jaune 134 du troisième canal, ainsi que la diode orange 143 du quatrième canal. Ceci signifie par conséquent que le premier produit P₁ est en rupture de stock, qu'il reste un nombre substantiel de second produits P₂ dans le canal C₂, qu'il reste deux produits dans le canal C₃ et qu'il ne reste en revanche plus qu'un seul produit dans le canal C₄. Ainsi, dans l'exemple ci-dessus, les quatre diodes d'un même jeu sont propres à fournir des informations différentes, concernant le nombre de produits présents dans chaque canal.

A titre de variante supplémentaire, on peut prévoir que chaque diode d'une même couleur est associée à une autre information, par exemple un volume donné de vente. Ainsi, on peut par exemple supposer que chaque première diode, aussi bien du côté avant que du côté arrière, est par exemple de couleur verte et désigne un canal où le produit a été vendu un nombre de fois inférieur à un seuil bas prédéterminé. Au contraire, chaque quatrième diode avant ou arrière, par exemple de couleur rouge, identifie un canal dans lequel le produit a été vendu un nombre de fois supérieur à un seuil haut déterminé. Enfin, chaque deuxième et troisième diodes identifie un canal dans lequel le produit a été vendu à une fréquence intermédiaire, respectivement relativement basse et relativement haute.

Dans ce mode de réalisation, l'éclairage des diodes permet d'accéder de manière immédiate à une information concernant le taux de vente des produits. Dans ces conditions, il est alors possible pour l'opérateur de modifier l'emplacement des produits, en particulier en disposant les articles les plus vendus dans les canaux dont l'accès est le plus rapide et commode.

La figure 11 illustre un exemple de mise en oeuvre de ce dernier mode de réalisation, dans lequel chaque première à quatrième diode présente respectivement une couleur verte, jaune, orange et rouge. Sur cette figure sont respectivement allumées la troisième diode 113 du premier canal, la deuxième diode 122 du deuxième canal, la quatrième diode 134 du troisième canal et la première diode 141 du quatrième canal. Ceci signifie par conséquent que le troisième produit présente un très fort taux de vente, le quatrième produit un très faible taux de vente, le premier produit un taux de vente relativement élevé et le quatrième produit un taux de vente relativement faible. Dans ces conditions, le pharmacien est alors susceptible de disposer préférentiellement le troisième produit, ainsi qu'éventuellement le premier produit, dans des emplacements d'accès faciles et rapides.

On peut prévoir que, pour un même jeu de diodes équipant un canal considéré, ces diodes soient susceptibles de fournir d'autres types d'informations concernant les produits. Ainsi, les diodes d'un même jeu sont en particulier propres à fournir des informations concernant les dates de péremption de ces produits. Dans ces conditions, on peut associer une première couleur de diodes, relative à une date de péremption très éloignée, une seconde couleur de diode relative à une date de péremption très proche, ainsi que deux autres couleurs de diodes relatives à des dates de péremption intermédiaires.

L'invention n'est pas limitée aux exemples décrits et représentés.

Ainsi, on a décrit ci-dessus un rayonnage pourvu d'une face avant et d'une face arrière, toutes deux accessibles, qui sont chacune associées à un jeu de diodes. On peut également prévoir que seule la face avant est accessible de sorte que, comme évoqué ci-dessus, elle forme ainsi à la fois l'entrée et la sortie de chaque canal.

Dans ces conditions, chaque canal peut être équipé, au niveau de cette face avant, de deux jeux de diodes, destinés respectivement à l'identification des produits pour le stockage et le déstockage. Ces deux jeux de diodes, par exemple disposés côte à côte, font avantageusement appel à des couleurs différentes, de manière à éviter toute confusion.

Cependant, à titre d'alternative, lorsque seule la face avant est accessible, on peut prévoir un seul jeu de diodes pour chaque canal, qui regroupe ainsi des diodes à la fois de stockage et de déstockage. Dans ces conditions, dans un premier mode de fonctionnement, ces diodes servent uniquement au stockage en étant associées aux postes de stockage puis, dans un deuxième mode de fonctionnement, servent uniquement au déstockage en étant associées aux postes de déstockage.

De plus, on peut également prévoir qu'un même produit puisse occuper plusieurs canaux différents, dans le cas où il s'agit d'un article à forte consommation. Dans ce cas, la saisie du code à barres de ce produit peut conduire par exemple à l'allumage de toutes les diodes associées à un même poste de stockage ou de déstockage, qui identifient alors les différents canaux recevant ce produit. A titre d'alternative, cette saisie du code-barres peut conduire à l'allumage de l'une seule de ces diodes, qui est par exemple celle qui identifie le canal dans lequel est stocké le plus grand nombre de produits.

On notera que la présence des différentes diodes leur confère un aspect esthétique, en dehors des informations visuelles qu'elles sont susceptibles de fournir. Ainsi, en période de fêtes, ces diodes sont propres à remplacer les éclairages classiques prévus à cet effet.

## Revendications

1. Ensemble de gestion de produits pharmaceutiques et parapharmaceutiques, comprenant :
- un rayonnage (2) pourvu de différents canaux de réception (C₁-C₄) de différents produits (P₁-P₄),chaque canal présentant une entrée (E) permettant le stockage des produits et une sortie (S) permettant le déstockage des produits ;
- plusieurs postes de stockage (ST₁-ST₄), pourvus de moyens informatiques (10, 12) de lecture de données relatives aux différents produits ;
- plusieurs poste de déstockage (DST₁-DST₄), pourvus de moyens informatiques (10, 12) de lecture de données relatives aux différents produits ;
- l'entrée (E) de chaque canal de réception (C₁-C₄) étant pourvue d'un jeu (J₂) de diodes de stockage, chaque diode (211, 221, 231, 241 - 214, 224, 234, 244) d'un même jeu (J₂₁-J₂₄) étant associée à un poste de stockage respectif, de sorte que la saisie d'une donnée d'un produit, au niveau d'un poste de stockage considéré, conduit à l'allumage de la diode de stockage associée à la fois à ce poste et au canal dans lequel ce produit doit être stocké ;
- la sortie (S) de chaque canal étant en outre pourvue d'un jeu (J₁) de diodes de déstockage, chaque diode (111, 121, 131, 141 - 114, 124, 134, 144) d'un même jeu (J₁₁-J₁₄) étant associée à un poste de déstockage respectif, de sorte que la saisie d'une donnée d'un produit, au niveau d'un poste de déstockage considéré, conduit à l'allumage de la diode de déstockage associée à la fois à ce poste et au canal à partir duquel ce produit doit être déstocké.

2. Ensemble selon la revendication 1, **caractérisé en ce que** les différents jeux (J₂₁-J₂₄) de diodes de stockage présentent le même nombre de diodes.

3. Ensemble selon les revendications 1 ou 2, **caractérisé en ce que** les différents jeux (J₁₁-J₁₄) de diodes de déstockage présentent le même nombre de diodes.

4. Ensemble selon les revendications 2 et 3, **caractérisé en ce qu'**il est prévu un même nombre de diodes de stockage et de déstockage à l'entrée (E) et à la sortie (S) de chaque canal (C).

5. Ensemble selon l'une quelconque des revendications précédentes, **caractérisé en ce que**, au sein de chaque jeu (J₁₁-J₁₄, J₂₁-J₂₄), les diodes (111-114, 121-124, 131-134, 141-144, 211-214, 221-224, 231-234, 241-244) présentent des couleurs différentes.

6. Ensemble selon la revendication 5, **caractérisé en ce que**, pour chaque jeu (J₁₁-J₁₄, J₂₁-J₂₄), les diodes d'un même rang (111-141, 211-241, 112-142, 212-242, 113-143, 213-243, 114-144, 214-244) présentent la même couleur.

7. Ensemble selon l'une quelconque des revendications précédentes, **caractérisé en ce que** l'entrée (E) et la sortie (S) sont prévues sur deux faces opposées (AV, AR) du rayonnage, les différents jeux (J₂₁-J₂₄) de diodes de stockage étant présents sur une première face (AR), alors que les différents jeux (J₁₁-J₁₄) de diodes de déstockage sont prévus sur la face opposée (AV).

8. Ensemble selon l'une quelconque des revendications précédentes, **caractérisé en ce que**, au sein d'un même jeu de diodes, les différentes diodes sont propres à fournir au moins une série d'informations différentes, relatives à la gestion des produits.

9. Ensemble selon la revendication 8, **caractérisé en ce qu'**une première série d'informations différentes est relative au nombre de produits présents dans les canaux.

10. Ensemble selon les revendications 8 ou 9, **caractérisé en ce qu'**une autre série d'informations différentes est relative à la fréquence de déstockage des produits.
